# EUROPÄISCHE PATENTSCHRIFT

(11) **EP 0 415 143 B1**
(45) Veröffentlichungstag und Bekanntmachung des Hinweises auf die Patenterteilung: **26.10.1994**
(21) Anmeldenummer: 90115295.9
(22) Anmeldetag: 09.08.1990
(51) Int. Cl.: G01B 9/02

(54) **Interferometrisches Messsystem**
Interferometric measuring system
Système de mesure interférométrique

(30) Priorität: 29.08.1989 DE 3928488
(43) Veröffentlichungstag der Anmeldung: 06.03.1991
(73) Patentinhaber: Alcatel SEL Aktiengesellschaft, D-70435 Stuttgart (DE); ALCATEL N.V., NL-1077 XX Amsterdam (NL)
(72) Erfinder: Dütting, Kaspar, D-7000 Stuttgart 31 (DE); Wünstel, Klaus, Dr. rer. nat., D-7141 Schwieberdingen (DE); Mayer, Hans-Peter, Dr. rer. nat., D-7015 Korntal-Münchingen 1 (DE); Lösch, Kurt, Dr. rer. nat., D-7000 Stuttgart 1 (DE)
(74) Vertreter: Pohl, Herbert, Dipl.-Ing.

(56) Entgegenhaltungen:
- WO-A-88/08121
- US-A- 4 167 337

## Beschreibung

Die Erfindung betrifft ein interferometrisches Meßsystem nach dem Oberbegriff des Patentanspruchs 1.

Ein derartiges Meßsystem ist aus der WO-A-8808121 bekannt. Es dient der optischen Überwachung eines Sichtfeldes. Das Licht der Lichtquelle wird in einem ersten Strahlteiler in zwei Teillichtbündel aufgespalten, die beide über Umlenkspiegel einem weiteren Strahlteiler zugeführt und durch diesen zu einem interferierenden Lichtbündel vereinigt werden. Zur Beobachtung der Interferenzringstruktur wird das interferierende Lichtbündel über eine Vergrößerungsoptik einer TV-Kamera mit nachgeschaltetem Monitor zugeführt.

Ein im Strahlengang eines der Teillichtbündel angeordnetes Dispersionsmittel, z.B. ein Transmissions- oder ein Reflexionsgitter, dient der Kompensation der Wellenlängenabhängigkeit des Meßsystems.

In dem bekannten Meßsystem sind die einzelnen optischen Bauelemente verteilt angeordnet und müssen sehr genau justiert sein. Erschütterungen und Temperatureinflüsse können die Einstellung verändern.

Aufgabe der Erfindung ist, ein interferometrisches Meßsystem der eingangs beschriebenen Art zu schaffen, das möglichst kompakt aufgebaut und damit unempfindlich gegenüber Erschütterungen und Temperatureinflüssen ist, und das sich besonders zur Bestimmung von Parametern hochkohärenter Lichtquellen eignet.

Diese Aufgabe wird durch die im Patentanspruch 1 angegebenen Merkmale gelöst.

Die Ausbildung des Meßsystems in Verbindung mit einem aus Teilblöcken zusammengesetzten, kompakten Block aus durchsichtigem Material erlaubt, alle optischen Bauteile auf Oberflächen des Blockes oder von Teilblöcken herzustellen oder aufzubringen und damit die geometrische Anordnung der optischen Bauteile ein für allemal festzulegen.

Die Verwendung eines geeigneten, für das verwendete Licht durchsichtigen Materials (z.B. Quarz) für den Block ermöglicht, auch Dejustage durch Temperatureinflüsse weitestgehend zu vermeiden.

Weiterbildungen des Meßsystems nach der Erfindung sind in den Unteransprüchen angegeben.

So sieht Anspruch 2 eine mehrfach gefaltete Führung der beiden Teillichtbündel vor, die in einem besonders spitzen Einfallswinkel der interferierenden Teillichtbündel gegenüber der Flächennormalen der Lichteinfallsfläche des Photoempfängers und damit auch in einem spitzwinkligen Verlauf der beiden Teillichtbündel zueinander resultiert.

Damit lassen sich Interferenzmuster sehr kleiner Gitterperioden erfassen. Eine dem Photoempfänger sonst vorzuschaltende Vergrößerungsoptik kann entfallen oder wenigstens weniger aufwendig gestaltet werden.

Wird, wie in Anspruch 3 angegeben, ein Referenz-Interferenzmuster im Eingang des Photoempfängers angeordnet, so wirkt der Photoempfänger als Moiré-Detektor und seine Auflösung wird noch erheblich gesteigert.

Die Breite der auszuwertenden Gitterperiode kann damit auf eine Größenordnung gebracht werden, die den Pixel-Abstand kommerziell erhältlicher Photodetektoren weit übersteigt. Auf eine teuere Vergrößerungsoptik kann damit verzichtet werden. Das Referenz-Interferenzmuster des Moiré-Detektors kann zudem gemäß Patentanspruch 4 photolithographisch direkt auf die Lichtaustrittsfläche des Blockes aufgebracht werden.

Weitere Ausgestaltungen des Meßsysems nach der Erfindung sind den Ansprüchen 5 und 6 zu entnehmen.

Anspruch 7 betrifft eine bevorzugte Verwendung des Meßsystems.

Die Erfindung wird nachstehend anhand einer Figur, die ein Ausführungsbeispiel wiedergibt, erläutert.

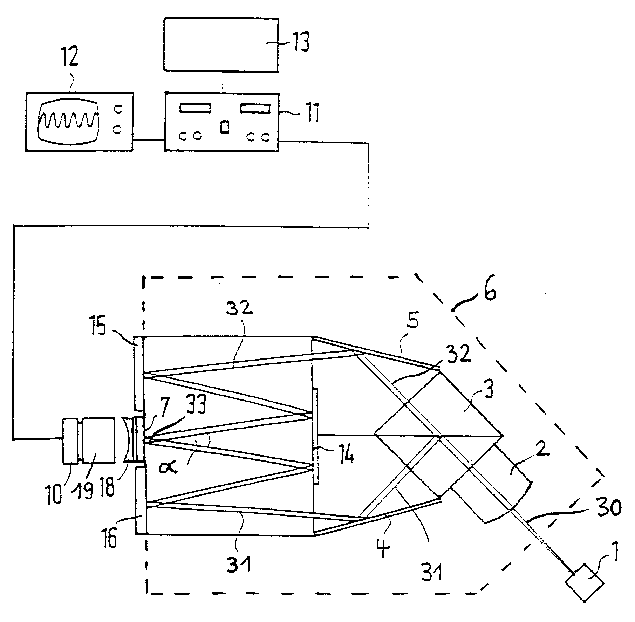

Die Figur zeigt eine Laserlichtquelle 1, die Licht im infraroten, sichtbaren oder ultravioletten Bereich emittiert. Allein die Verfügbarkeit der benutzten optischen Bauelemente beschränkt die Anwendbarkeit des Meßsystems bezüglich des Wellenlängenbereiches. Lichtquellen, die mit dem Meßsystem untersucht werden können, sind z.B. Halbleiterlaser, Farbstofflaser und Gaslaser.

Das von der zu untersuchenden Laserlichtquelle 1 erzeugte Licht wird durch eine konvexe Linse 2, die sich im Abstand ihrer Brennweite von der Laserlichtquelle 1 entfernt befindet, zu einem parallelen Lichtstrahl 30 gebündelt. Anstelle der Linse 2 kann auch ein aus mehrerern Linsen gebildetes Kondensorsystem verwendet werden. Der parallele Lichtstrahl trifft dann auf einen Strahlteiler 3. Von diesem wird er einerseits als erstes Teillichtbündel 31 auf einen Reflektor 4 reflektiert und andererseits als zweites Teillichtbündel 32 zu einem Reflektor 5 durchgelassen.

Die beiden Teillichtbündel werden nach Reflexion an den Reflektoren 4 und 5 wieder zusammengeführt und über eine Vergrößerungsoptik als interferierendes Lichtbündel 33 einem Photoempfänger 10 zugeführt. Die Figur zeigt die optischen Bauelemente in einem nahezu schwingungsfreien und gegen Temperatureinflüsse unempfindlichen Aufbau. Dieser ergibt sich dadurch, daß die Linse 2, der Strahlteiler 3, die Reflektoren 4, 5 und, falls vorhanden, weitere Reflektoren 14, 15, 16 sowie ein Referenz-Interferenzmuster 7 fest mit einem aus Teilblöcken zusammengesetzten Block 6 verbunden sind. Aus dem Block 6 tritt das interferierende Lichtbündel 33 über die dem Photoempfänger vorgeschaltete Vergrößerungsoptik, die hier aus den Linsen 18 und 19 besteht, in den Photoempfänger 10 ein. Dessen elektrisches Ausgangssignal wird einer Auswerteeinrichtung 11 zugeführt, an die ein Oszilloskop 12 und ein Fourier-Transformator 13 angeschlossen sind.

Der Photoempfänger ist ein ortsauflösender Detektor. Er enthält z.B. eine CCD (Charge Coupled Device)-Zeile, und kann drehbar angeordnet sein.

Aus den vom Fourier-Transformator ermittelten Fourier-Komponenten, die zeitlichen, räumlichen und thermischen Schwankungen unterliegen, lassen sich unmittelbar die von der Laserlichtquelle 1 emittierten Moden, deren Stärke und Stabilität bestimmen. Aus der Anzahl der Moden und der Länge des Laserresonators ergeben sich die Kohärenzlänge und die Kohärenzzeit des emittierten Lichtes. Die Laserleistung kann unmittelbar aus der integralen Helligkeit des Interferenzmusters bestimmt werden. Wird die Lichtquelle 1 gegenüber der übrigen Anordnung drehbar gelagert, läßt sich auch die Polarisationsrichtung des Laserlichts ermitteln.

Der Winkel α zwischen den durch die Reflektoren 4 und 5 reflektierten Teillichtbündeln wird möglichst spitz gewählt, um auch Interferenzmuster sehr kleiner Gitterperioden beobachten zu können.

Mit der in der Figur wiedergegebenen Anordnung können bis zu 10 Gitterperioden eines Interferenzmusters auf dem Photoempfänger beobachtet werden, die in der Abbildung jeweils größer als die Pixelabstände eines üblichen Photodetektors erscheinen.

Der Block 6 besteht z.B. aus Quarz oder aus einem Halbleitermaterial. Teilflächen des Blockes sind, z.B. durch schräges Bedampfen mit einem Metall, als Reflektoren 4, 5, 15, 16 ausgebildet. Relektoren können auch auf Flächen der Teilblöcke aufgebracht sein und sich, wie z.B. der Reflektor 14, nach Zusammenfügen der Teilblöcke im Inneren des Blockes 6 befinden. Der Strahlteiler 3 besteht aus einem diagonal geschnittenen Würfel, der nach Teilverspiegelung der Schnittfläche wieder zusammengefügt wurde. Parallel zueinander verlaufende, einander gegenüberstehende Reflektoren 14, 15, 16 erlauben eine mehrfache Umlenkung (Faltung) der Teillichtbündel, mit der leicht ein sehr spitzer Winkel bei der Zusammenführung der beiden Teilbündel und damit ohne den Einsatz teurer Linsensysteme eine hohe Auflösung bei der Beobachtung der Interferenzmuster erreicht wird.

Die einzelnen Teilblöcke wurden nach Präparation ihrer Oberflächen (Verspiegeln, Polieren, evtl. lichtundurchlässig abdecken) mit Hilfe von optischem Kitt oder eines durchsichtigen Kunststoffes zum Block 6 zusammengesetzt.

Ein Referenz-Interferenzmuster 7 kann direkt auf die Lichtaustrittsfläche des Blockes 6 aufgebracht sein und bewirkt, daß der Photoempfänger als Moirè-Detektor arbeitet.

Zusätzlich kann einer der Reflektoren 15, 16 als Phasenschieber ausgebildet sein, so daß das Referenz-Interferenzmuster verändert erscheint.

Wird in eines der beiden Teillichtbündel ein Referenz-Interferenzmuster gebracht, das dem zu erwartenden Soll-Interferenzmuster entspricht (beispielsweise als Reflexionsmuster anstelle des Reflektors 15), so erzeugt dies eine Fourier-Transformierte des durch die Teillichtbündel gebildeten Interferenzmusters und erhöht damit, wie ein Moiré-Detektor das Auflösungsvermögen des Photoempfängers.

## Patentansprüche

1. Interferometrisches Meßsystem, das eine Lichtquelle (1) zur Erzeugung kohärenten Lichtes, einen Strahlteiler (3), Reflektoren (4, 5, 14, 15, 16), einen Photoempfänger (10) und Mittel (2) zur Strahlaufweitung umfaßt, und in dem ein von der Lichtquelle erzeugtes Lichtbündel (30) durch den Strahlteiler in zwei Teilbündel (31, 32) aufgespalten wird, welche nach Umlenkung durch Reflektoren zu einem interferierenden Lichtbündel (33) zusammengeführt werden und ein Interferenzmuster ausbilden, das auf den Photoempfänger abgebildet und elektrisch ausgewertet wird,
**dadurch gekennzeichnet**, daß das von der Lichtquelle (1) ausgehende Lichtbündel (30) in einen aus Teilblöcken zusammengesetzten Block (6) aus lichtdurchlässigem Material eintritt, daß der Strahlteiler (3) im Inneren des Blockes und die zur Strahlumlenkung benötigten Reflektoren (4, 5, 14, 15, 16) im Inneren des Blockes und/oder an dessen Oberfläche angeordnet sind, daß der Block eine Lichtaustrittsfläche besitzt, durch die das interferierende Lichtbündel (33) den Block verläßt, und daß der Lichtaustrittsfläche eine Lichteintrittsfläche des Photoempfängers (10) aufliegt oder gegenübersteht.

2. Meßsystem nach Patentanspruch 1,
dadurch gekennzeichnet, daß innerhalb des Blockes (6) und/oder an dessen Oberfläche zueinander parallel verlaufende, einander gegenüberstehende Spiegelflächen (Reflektoren 14, 15, 16) geschaffen sind, zwischen denen die Teillichtbündel, bevor sie die Lichtaustrittsfläche erreichen, mehrfach hin- und herreflektiert werden.

3. Meßsystem nach Anspruch 1 oder Anspruch 2,
dadurch gekennzeichnet, daß der Photoempfänger durch Vorschalten eines Referenz-Interferenzmusters (7) als Moiré-Detektor ausgebildet ist.

4. Meßsystem nach Anspruch 3,
dadurch gekennzeichnet, daß das Referenz-Interferenzmuster (7) photolithographisch auf die Lichtaustrittsfläche des Blockes (6) aufgebracht ist.

5. Meßsystem nach einem der vorstehenden Patentansprüche,
dadurch gekennzeichnet, daß der Block (6) aus Quarz besteht.

6. Meßsystem nach einem der vorstehenden Patentansprüche,
dadurch gekennzeichnet, daß ein einem Soll-Interferenzmuster entsprechendes Referenz-Interferenzmuster zusätzlich in einem der Teillichtbündel angeordnet ist.

7. Verwendung eines Meßsystems nach einem der vorstehenden Patentansprüche zur Prüfung von Laserlichtquellen auf Einhaltung charakteristischer Parameterwerte.

## Claims

1. An interferometric measurement system which comprises a light source (1) for the generation of coherent light, a beam splitter (3), reflectors (4, 5, 14, 15, 16), a photo-detector (10) and beam expansion means (2) and in which a light beam (30), generated by the light source, is split by the beam splitter into two subsidiary beams (31, 32) which, having been deflected by reflectors, are combined into an interfering light beam (33) and form an interference pattern which is imaged on the photo-detector and electrically analyzed, characterised in that the light beam (30) which emanates from the light source (1) enters a block (6) of transparent material composed of subsidiary blocks, that the beam splitter (3) is arranged inside the block and the reflectors (4, 5, 14, 15, 16) required for the beam deflection are arranged inside the block and/or on its surface, that the block possesses a light outlet surface through which the interfering light beam (33) issues from the block, and that a light inlet surface of the photo-detector (10) rests against or is disposed opposite the light outlet surface.

2. A measurement system as claimed in Claim 1,
characterised in that within the block (6) and/or on its surface are provided reflective surfaces (reflectors 14, 15, 16) which extend in parallel to one another and are disposed opposite one another and between which the subsidiary light beams, before they reach the light outlet surface, are reflected back and forth several times.

3. A measurement system as claimed in Claim 1 or Claim 2,
characterised in that the photo-detector is constructed as a moiré detector in that a reference interference pattern (7) is connected at the input end of said photo-detector.

4. A measurement system as claimed in Claim 3,
characterised in that the reference interference pattern (7) is applied photolithographically to the light outlet surface of the block (6).

5. A measurement system as claimed in one of the preceding claims, characterised in that the block (6) consists of quartz.

6. A measurement system as claimed in one of the preceding claims, characterised in that a reference interference pattern corresponding to a theoretical interference pattern is additionally arranged in one of the subsidiary light beams.

7. The use of a measurement system as claimed in one of the preceding claims for checking laser light sources for adherence to characteristic parameter values.

## Revendications

1. Système de mesure interférométrique qui comporte une source de lumière (1) pour produire une lumière cohérente, un diviseur de faisceau (3), des réflecteurs (4, 5, 14, 15, 16), un photorécepteur (10) et des moyens (2) pour élargir le faisceau, et dans lequel un faisceau lumineux (30) produit par la source de lumière est divisé, par le diviseur de faisceau, en deux faisceaux partiels (31, 32) qui, après changement de direction provoqué par les réflecteurs, se regroupent pour donner un faisceau lumineux (33) fournissant des interférences et forment une image d'interférence qui donne une représentation sur le photorécepteur et qui est traitée électriquement,
caractérisé par le fait que le faisceau lumineux (30) sortant de la source de lumière (1) pénètre dans un bloc (6), composé de blocs partiels, en matériau transparent à la lumière, que le diviseur de faisceau (3) est disposé à l'intérieur du bloc et que les réflecteurs (4, 5, 14, 15, 16) nécessaires pour la déviation du faisceau sont disposés à l'intérieur du bloc et/ou à sa surface, que le bloc possède une surface de sortie de la lumière par laquelle le faisceau lumineux (33) fournissant les interférences quitte le bloc et que la surface de sortie de la lumière s'appuie contre une surface d'entrée de la lumière du photorécepteur (10) ou se trouve en face d'elle.

2. Système de mesure selon la revendication 1,
caractérisé par le fait qu'à l'intérieur du bloc (6) et/ou à sa surface sont créées des surfaces réfléchissantes (réflecteurs 14, 15, 16) qui sont orientées parallèlement l'une à l'autre, sont situées en face l'une de l'autre et entre lesquelles les faisceaux lumineux partiels sont plusieurs fois réfléchis en va-et-vient avant d'atteindre la surface de sortie de la lumière.

3. Système de mesure selon la revendication 1 ou la revendication 2,
caractérisé par le fait que, du fait du montage amont d'une image d'interférence de référence (7), le photorécepteur est conçu sous la forme d'un détecteur de Moiré.

4. Système de mesure selon la revendication 3,
caractérisé par le fait que l'image d'interférence de référence (7) est rapportée par voie photolithographique, sur la surface de sortie de la lumière du bloc (6).

5. Système de mesure selon l'une des revendications précédentes,
caractérisé par le fait que le bloc (6) est en quartz.

6. Système de mesure selon l'une des revendications précédentes,
caractérisé par le fait qu'une image d'interférence de référence correspondant à une image d'interférence prescrite est en outre disposée dans l'un des faisceaux lumineux partiels.

7. Emploi des systèmes de mesure selon l'une des revendications précédentes pour vérifier si les sources de lumière laser respectent des valeurs caractéristiques des paramètres.
